# EUROPEAN PATENT SPECIFICATION

(11) **EP 2 184 307 B1**
(45) Date of publication and mention of the grant of the patent: **26.02.2014**
(21) Application number: 08773203.8
(22) Date of filing: 17.07.2008
(51) Int. Cl.: C08G 63/06, C08G 63/91, A01G 13/02, C08J 5/22

(54) **PRODUCING METHOD FOR POLYLACTIC ACID-BASED COPOLYMER**
HERSTELLUNGSVERFAHREN FÜR COPOLYMER AUF BASIS VON POLYMILCHSÄURE
MÉTHODE DE PRODUCTION DE COPOLYMÈRE À BASE D'ACIDE POLYLACTIQUE

(30) Priority: 02.08.2007 CN 200710044504
(43) Date of publication of application: 12.05.2010
(73) Proprietor: Tongji University, Yang Pu Shanghai 200092 (CN)
(72) Inventor: REN, Jie, Shanghai 200092 (CN); YU, Tao, Shanghai 200092 (CN); YU, Xiao, Shanghai 200092 (CN); YANG, Ming, Shanghai 200092 (CN); ZHOU, Xinyu, Shanghai 200092 (CN)
(74) Representative: Glawe, Delfs, Moll
(86) International application number: PCT/CN2008/071667
(87) International publication number: WO 2009/015577

(56) References cited:
- EP-A1- 1 555 278
- WO-A1-2005/116110
- CN-A- 101 121 780
- US-A- 6 130 271
- US-A- 6 130 271
- US-B1- 6 316 581
- COHN D ET AL: "Designing biodegradable multiblock PCL/PLA thermoplastic elastomers", BIOMATERIALS, ELSEVIER SCIENCE PUBLISHERS BV., BARKING, GB, vol. 26, no. 15, 1 May 2005 (2005-05-01), pages 2297-2305, XP027768125, ISSN: 0142-9612 [retrieved on 2005-05-01]
- JIE REN ET AL: "Chain-linked lactic acid polymers by benzene diisocyanate", JOURNAL OF APPLIED POLYMER SCIENCE, vol. 99, no. 3, 5 February 2006 (2006-02-05), pages 1045-1049, XP55039045, ISSN: 0021-8995, DOI: 10.1002/app.22617
- LI X. ET AL.: 'Synthesis and Characterization of Copolymer Lactide and Ethylene Carbonate' POLYMER MATERIALS SCIENCE & ENGINEERING vol. 22, no. 2, pages 75 - 78, XP008131627

## Description

### FIELD OF INVENTION

The present invention relates to poly (lactic acid)-based copolymers and to a method for preparing them.

### BACKGROUND OF INVENTION

Poly Lactic Acid (PLA) comes from the renewable crops (e.g. corns) and the most outstanding advantage of PLA is the biodegradable property. PLA can be degraded by microorganisms in natural environment and transformed into carbon dioxide and water without contaminating the environment and is beneficial for environmental protection. The widespread use of PLA will alleviate the present severe resource exhaustion crisis and environmental pollution, and resolve the sales problems of the agriculture products in our country. Furthermore, PLA has great mechanical properties, thermoplasticity, fibre-forming property and high diaphaneity. Therefore, PLA is suitable for many processing methods including blow molding, extrusion and injection molding. PLA is easy to manufacture, and many properties of it are much better than currently used plastics such as polyethylene, polypropylene or polystyrene. However, PLA has many disadvantages including hard texture, poor toughness, lacking of flexibility and elasticity, easy to bend and deform and high crystallinity. Additionally, the degradation speed of PLA is hard to control and its function can't be extended through chemical reaction. The disadvantages as stated above limit the application and using effects of PLA, whose properties should be improved by modification surgently.

Polycaprolactone diols and aliphatic polycarbonate diols not only have flexible chain segment in their molecules, but also have great biodegradable property. It will improve the toughness of PLA without affecting the degradability of PLA by the copolymerization with polycaprolactone and aliphatic polycarbonate diols.

D. Cohn et al., Biomaterials, Vol. 26, No. 15 (2005), pages 2297-2305 disclose diisocyanate chain-extended polycaprolactone/PLA copolymers. US 6,130,271 discloses PLA/trimethylene carbonate block copolymers.

### DESCRIPTION OF INVENTION

The present invention provides a method for preparing a poly (lactic acid)-based copolymer material which has improved toughness. The polyester obtained in the present invention comprises 10% to 50% of degradable aliphatic polycarbonate and 50% to 90% of poly lactic acid. In the present invention, the poly (lactic acid)-based copolymers with high molecular weight and great properties are prepared by introducing a flexible chain segment into the molecule chain of PLA, and then extending the chain. In addition, the copolymers in the present invention also show predominant performances such as high elasticity, flexibitity, hydrolysis resistance, thermostability, weatherability, chemical resistance and biodegradation. The method of the present invention is simple and feasible for industrial production, and the biodegradable copolymer resin product obtained by this method can be applied to many fields including packing, auto industry, aeronautics, astronautics, electronics and so on.

In the present invention, lactic acid prepolymers are synthesized via direct melt polycondensation, and then the poly (lactic acid)-based multi-block copolymers with high molecular weight are obtaind via chain extension process. The detailed processes are as follows:
(1) Lactic acid and aliphatic polycarbonate diols are added into the reaction vessel and then a polycondensation reaction is performed in the presence of a catalytic agent under vacuum to synthesize the Poly-(lactic acid)-polycarbonate copolymers. The molecular formular of poly lactic acid is HOCH(CH3)COOH. We notice that the functionality of PLA which has a carboxyl group at one end and a hydroxyl group at the other end is 2 and thus an esterification reaction (r=1) could be carried out. The polycondensation reaction that happens is a linear polycondensation. Firstly, a dimer which has a carboxyl group at one end and a hydroxyl group at the other end is formed by the polymerization of two lactic acid molecules. Therefore, it is possible for the dimer to have an esterfication with lactic acid or another dimer as well, and an oligomer such as trimer or tetramer will be synthesized in this way then. The oligomer can react with lactic acid as well as themselves to form a product with higher degree of polymerization. At last, a linear polycondensate with high molecular weight will be synthesized, accompanied by the formation of water. Every step of the polyesterfication reaction is reversible and balanced. In view of the reality, we should shift the chemical equilibrium towards the direction of polymer generation to obtain the polymers with higher molecular weight. However, it will cause the hydroxide radical in the reaction system extension after diols adding. As a result, the chemical equilibrium will be upset and shifted towards the opposite direction. Furthermore, the molecular weight of the polymerization products will decrease. The more diols added, the more drastic the reverse reaction is, the lower the molecular weight of the polymerization products. Thus the ratio of lactic acid and polyester diol should be controlled.
(2) The chain-extending reaction of the poly-(lactic acid) polycarbonate copolymers with low molecular weight obtained in step (1) will be applied in the presence of the chain extender and catalyst to synthesize the poly-(lactic acid)-polycarbonate copolymers with high molecular weight.

The more detailed processes of the present invention are as follows:
(1) Lactic acid and aliphatic polycarbonate diol are added into the reaction vessel, and then a polycondensation reaction is performed in the presence of catalytic agent with the pressure of 1000 to 2000Pa and the temperature of 90 to 120°C for 1 to 5h under vacuum in the vessel. Then the pressure in the vessel will be reduced below 100Pa and the temperature of the reaction will be raised to 150~ 200°C and the reaction will be proceeded for 15 to 20h. A lactic acid prepolymer with the M_{w} of 0.8×10³ to 3.0×10⁴ will be obtained: 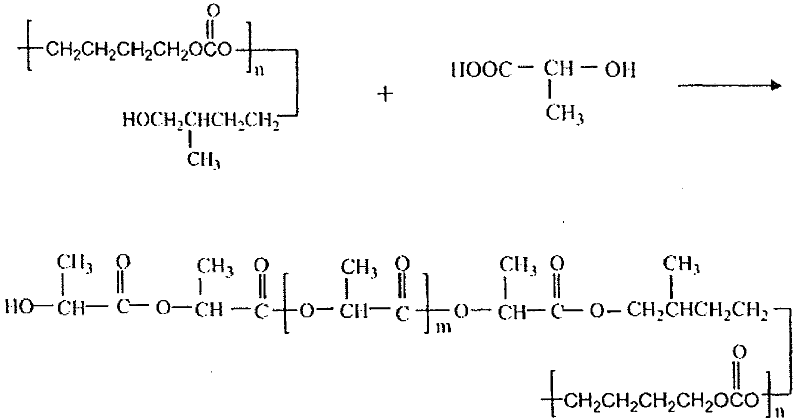
(2) The lactic acid prepolymer obtained in step (1) is added into the reaction vessel, then the vessel is vacuum-pumped and nitrogen is led in, and a chain-extending reaction is proceeded at 150 to 200°C for 10 to 50 minutes in the presence of chain extender and catalytic agent. The product with the weight-average molecular weight (M_{w}) of 1×10⁵ to 2×10⁵ is obtained.

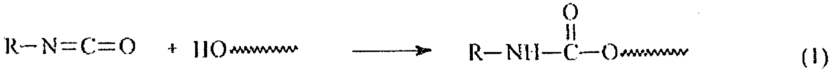

The aliphatic polycarbonate diols employed in the present invention is selected from the group comprising poly propylene carbonate , poly(1,6-hexanediol) carbonate, poly(1,6-hexanediol) carbonate diol, poly (hexamethylene carbonate) diol, poly(1,4-butanediol) carbonate and so on.

The aliphatic polycarbonate diols employed in the present invention have the weight-average molecular weight (M_{w}) of 1000 to 5000.

In the process of the polycondensation reaction in step (1) in the present invention, the molar ratio of lactic acid and aliphatic polyester diol is 50:1 to 10:1.

The catalytic agent employed in the process of the chain-extending reaction in step (2) of the present invention is selected from the group comprising: stannous octoate, stannous chloride, dibutyltin dilaurate, ferric caprylate, cobalt caprylate, zinc epoxy acid, triethylene diamine, ethanolamine, diethanolamine, alone or in combination thereof.

The chain extender employed in the present invention is selected from the group comprising diisocyanate compounds, isocyanate compounds and amide compounds.

In the present invention, the molar ratio of the lactic acid prepolymers and the chain extender is 3:1 to 1:1.

In the present invention, the lactic acid prepolymers should be refined and purified before the chain-extending reaction.

The advantages of the present invention are as follows:
(1) The poly lactic acid material with excellent biodegradation, high molecular weight and great mechanical properties is prepared by chain-extending reaction of lactic acid prepolymers.
(2) The copolymers prepared have great mechanical properties by introducing various linear aliphatic polycarbonates with different structures and properties into PLA to improve its fragility.
(3) Compared with the two-step method of the poly lactic acid with high molecular weight, the process in the present invention is simple and feasible for the industrialized production.

### IMPLEMENTATION EXAMPLES

### Example 1:

(1)400g of L-lactic acid and 20g of aliphatic polycarbonate diols (with the molecular weight of 2000) were added into the reaction vessel under vacuum, then 1g of stannous octoate was added into the reaction vessel as catalytic agent, and the reaction was proceeded with the pressure of 1000 to 2000Pa in the vessel and the temperature of 100°C for 2h under vacuum. Then the pressure in the vessel was reduced blow 100Pa and the temperature of the reaction was raised to 160°C, and the reaction was proceeded for another 16h. The lactic acid prepolymers with the molecular weight (Mw) of 0.8 × 10³ to 3.0 × 10⁴ was obtained.
(2) The lactic acid prepolymers obtained in step (1) was added into the reaction vessel, and then the vessel was vacuum-pumped and nitrogen is led in. Hexamethylene diisocyanate (HDI) was added into the reaction vessel as the chain extender and stannous octoate was added into the reaction vessel as the catalytic agent. Afterwards, a chain-extending reaction was proceeded at 170°C for 30 minutes. The molar ratio of PLA and HDI was 3:1 and the amount of stannous octoate added was 1%. The product with the weight-average molecular weight (Mw) of 1 × 10⁶ to 2 × 10⁵ was obtained.

### Example 2: (not according to the invention)

(1) 800g of L-lactic acid and 40g of polycaprolactone diols (with the molecular weight of 3000) were added into the reaction vessel under vacuum, then 1g of stannous octoate was added into the reaction vessel as catalytic agent, and the reaction was proceeded with the pressure of 1000 to 2000Pa in the vessel and the temperature of 100°C for 2h under vacuum. Then the pressure in the vessel was reduced blow 100Pa and the temperature of the reaction was raised to 160°C, and the reaction was proceeded for another 16h. The lactic acid prepolymers with the molecular weight (Mw) of 0.8 × 10³ to 3.0 × 10⁴ was obtained.
(2) The lactic acid prepolymers obtained in step (1) was added into the reaction vessel, and then the vessel was vacuum-pumped and nitrogen is led in. Hexamethylene diisocyanate (HDI) was added into the reaction vessel as the chain extender and stannous octoate was added into the reaction vessel as the catalytic agent. Afterwards, a chain-extending reaction was proceeded at 170°C for 30 minutes. The molar ratio of PLA and HDI was 3:1 and the amount of stannous octoate added was 1%. The product with the weight-average molecular weight (Mw) of 1 × 10⁵ to 2 × 10⁵ was obtained.

### Example 3:

(1) 800g of L-lactic acid and 40g of aliphatic polycarbonate diols (with the molecular weight of 4000) were added into the reaction vessel under vacuum, then 1g of stannous octoate was added into the reaction vessel as catalytic agent, and the reaction was proceeded with the pressure of 1000 to 2000Pa in the vessel and the temperature of 100°C for 2h under vacuum. Then the pressure in the vessel was reduced blow 100Pa and the temperature of the reaction was raised to 160°C, and the reaction was proceeded for another 16h. The lactic acid prepolymers with the molecular weight (Mw) of 0.8×10³ to 3.0 ×10⁴ was obtained.
(2) The lactic acid prepolymers obtained in step (1) was added into the reaction vessel, and then the vessel was vacuum-pumped and nitrogen is led in. Hexamethylene diisocyanate (HDI) was added into the reaction vessel as the chain extender and stannous octoate was added into the reaction vessel as the catalytic agent. Afterwards, a chain-extending reaction was proceeded at 170°C for 30 minutes. The molar ratio of PLA and HDI was 2.5:1 and the amount of stannous octoate added was 1%. The product with the weight-average molecular weight (Mw) of 1× 10⁵ to 2×10⁵ was obtained.

### Example 4:

(1) 800g of L-lactic acid and 20g of aliphatic polycarbonate diols (with the molecular weight of 2000) were added into the reaction vessel under vacuum, then 1g of stannous octoate was added into the reaction vessel as catalytic agent, and the reaction was proceeded with the pressure of 1000 to 2000Pa in the vessel and the temperature of 110°C for 2h under vacuum. Then the pressure in the vessel was reduced blow 100Pa and the temperature of the reaction was raised to 170°C, and the reaction was proceeded for another 20h. The lactic acid prepolymers with the molecular weight (Mw) of 0.8X 10³ to 3.0 ×10⁴ was obtained.
(2) The lactic acid prepolymers obtained in step (1) was added into the reaction vessel, and then the vessel was vacuum-pumped and nitrogen is led in. Diphenylmethane-4;4'-diisocyanate (MDI) was added into the reaction vessel as the chain extender and stannous octoate was added into the reaction vessel as the catalytic agent. Afterwards, a chain-extending reaction was proceeded at 180°C for 30 minutes. The molar ratio of PLA and MDI was 2:1 and the amount of stannous octoate added was 1%. The product with the weight-average molecular weight (Mw) of 1 × 10⁵ to 2 × 10⁵ was obtained.

### Example 5:

(1) 800g of L-lactic acid and 20g of aliphatic polycarbonate diols (with the molecular weight of 2000) were added into the reaction vessel under vacuum, then 1 g of stannous octoate was added into the reaction vessel as catalytic agent, and the reaction was proceeded with the pressure of 1000 to 2000Pa in the vessel and the temperature of 110°C for 2h under vacuum. Then the pressure in the vessel was reduced blow 100Pa and the temperature of the reaction was raised to 170°C, and the reaction was proceeded for another 20h. The lactic acid prepolymers with the molecular weight (Mw) of 0.8 × 10³ to 3.0 × 10⁴ was obtained.
(2) The lactic acid prepolymers obtained in step (1) was added into the reaction vessel, and then the vessel was vacuum-pumped and nitrogen is led in. Diphenylmethane-4;4'-diisocyanate (MDI) was added into the reaction vessel as the chain extender and dibutyltin dilaurate was added into the reaction vessel as the catalytic agent. Afterwards, a chain-extending reaction was proceeded at 180°C for 30 minutes. The molar ratio of PLA and MDI was 2.5:1 and the amount of dibutyltin dilaurate added was 1%. The product with the weight-average molecular weight (Mw) of 1 × 10⁵ to 2 × 10⁵ was obtained.

**Table 1. Molecular weight of copolymers**

| Example. No. | NCO/OH | [η] | Mₙ | M_{w} | M_{w} / Mₙ |
|---|---|---|---|---|---|
| 1 | 3 | 1.379 | 39311 | 209970 | 5.34 |
| 2 | 3 | 1.294 | 39896 | 249762 | 6.26 |
| 3 | 2.5 | 1.047 | 45824 | 198983 | 4.34 |
| 4 | 2 | 0.785 | 39616 | 113812 | 2.87 |
| 5 | 2.5 | 0.891 | 30586 | 121714 | 3.98 |

**Table 2. The mechanical parameters of copolymers**

| Example. No. | Tensile strength (MPa) | Elongation at break (%) |
|---|---|---|
| 1 | 5.45 | 238.88 |
| 2 | 6.05 | 165.26 |
| 3 | 6.95 | 199.24 |
| 4 | 8.49 | 68.38 |
| 5 | 5.03 | 100.13 |

## Claims

1. A method for preparing poly (lactic acid)-based copolymers, wherein said method comprises the steps of:
(1) A polycondensation reaction of lactic acid and aliphatic polycarbonate diols is performed in the presence of catalytic agent under vacuum to synthesize the Poly-(lactic acid)-Polycarbonate copolymers, wherein said aliphatic polycarbonate diols employed in the present invention is selected from the group consisting of poly propylene carbonate , poly(1,6-hexanediol) carbonate, poly(1,6-hexanediol) carbonate diol, poly (hexamethylene carbonate) diol and poly(1,4-butanediol) carbonate;
(2) A chain-extending reaction of the Poly-(lactic acid)-Polycarbonate copolymers is performed in the presence of chain extender and catalytic agent, the Poly-(lactic acid)-Polycarbonate copolymers with the Mw of 1×10⁵ to 2×10⁵ is obtained.

2. The preparation method according to claim 1, wherein said step (1) of the preparation method comprises: adding the lactic acid and aliphatic polycarbonate diol into the reaction vessel, and then performing a polycondensation reaction in the presence of catalytic agent with the pressure of 1000 to 2000Pa in the vessel and the temperature of 90 to 120 °C for 1 to 5h under vacuum, then reducing the pressure in the vessel blow 100Pa and raising the temperature of the reaction to 150~200°C and proceeding the reaction for another 15 to 20h, and obtaining a lactic acid prepolymer with the Mw of 0.8×10³ to 3.0×10⁴;
and said step (2) of the preparation method comprises: adding the lactic acid prepolymer obtained in step (1) into the reaction vessel, then vacuum-pumping the vessel and leading in nitrogen, and proceeding a polymerization reaction at 150 to 200 °C for 10 to 50 minutes in the presence of chain extender and catalytic agent result in the required product with the weight-average molecular weight of 1 × 10⁵ to 2 × 10⁵.

3. The preparation method according to claim 1, wherein said aliphatic polycarbonate diols employed in the present invention have the weight-average molecular weight of 1000 to 5000.

4. The preparation method according to claim 1, wherein the molar ratio of lactic acid and aliphatic polycarbonate diol is 50:1 to 10:1 in the polycondensation reaction in step (1) of the process in the present invention.

5. The preparation method according to claim 1, wherein the catalytic agent employed in the chain-extending reaction in step (2) of the present invention is selected from the group comprising: stannous octoate, stannous chloride, dibutyltin dilaurate, antimonous oxide, germanium chloride, ferric caprylate, cobalt caprylate, zinc epoxy acid, triethylene diamine, ethanolamine, diethanolamine, alone or in combination thereof.

6. The preparation method according to claim 1, wherein said chain extender employed in the present invention is selected from the group comprising diisocyanate compounds, isocyanate compounds and amide compounds.

7. The preparation method according to claim 1, wherein the molar ratio of the lactic acid prepolymers and the chain extender is 3:1 to 1:1.

8. The preparation method according to claim 1, wherein the lactic acid prepolymers should be refined and purified before the chain-extending reaction.

9. The poly (lactic acid)-based copolymers prepared by the method comprising: performing a polycondensation reaction of lactic acid and aliphatic polycarbonate diols in the presence of catalytic agent under vacuum to synthesize the Poly-(lactic acid)-Polycarbonate copolymers; and then performing a chain-extending reaction of the Poly-(lactic acid)-Polycarbonate copolymers in the presence of chain extender and catalytic agent, and wherein the said poly (lactic acid)-based copolymers has the weight-average molecular weight of 1 × 10⁵ to 2 × 10⁵; and wherein the said aliphatic polycarbonate diols are selected from the group consisting of poly propylene carbonate, poly(1,6-hexanediol) carbonate, poly(1,6-hexanediol) carbonate diol, poly ( hexamethylene carbonate ) diol and poly(1,4-butanediol) carbonate ; and wherein the said chain extender employed in the present invention is selected from the group consisting of diisocyanate compounds, isocyanate compounds and amide compounds.

10. The poly (lactic acid)-based copolymers according to claim 9, wherein said aliphatic polycarbonate diols have the weight-average molecular weight of 1000 to 5000.

## Patentansprüche

1. Verfahren zur Herstellung von Copolymeren auf Basis von Poly(milchsäure), wobei das Verfahren folgende Schritte umfasst:
(1) eine Polykondensationsreaktion von Milchsäure und aliphatischen Polycarbonatdiolen wird in Gegenwart von katalytischem Agens unter Vakuum durchgeführt, um die Poly(milchsäure)-Polycarbonat-Copolymere zu synthetisieren, wobei die bei der vorliegenden Erfindung eingesetzten aliphatischen Polycarbonatdiole aus der Gruppe bestehend aus Polypropylencarbonat, Poly(1,6-hexandiol)carbonat, Poly-(1,6-hexandiol)carbonatdiol, Poly(hexamethylencarbonat)diol und Poly(1,4-butandiol)carbonat ausgewählt werden;
(2) eine Kettenverlängerungsreaktion der Poly-(milchsäure)-Polycarbonat-Copolymere wird in Gegenwart von Kettenverlängerungsmittel und katalytischem Agens durchgeführt, wobei die Poly(milchsäure)-Polycarbonat-Copolymere mit dem Mw von 1 x 10⁵ bis 2 x 10⁵ erhalten werden.

2. Herstellungsverfahren nach Anspruch 1, wobei der Schritt (1) des Herstellungsverfahrens Folgendes umfasst: Geben der Milchsäure und des aliphatischen Polycarbonatdiols in das Reaktionsgefäß und dann Durchführen einer Polykondensationsreaktion in Gegenwart von katalytischem Agens bei einem Druck von 1000 bis 2000 Pa im Gefäß und einer Temperatur von 90 bis 120°C über einen Zeitraum von 1 bis 5 h unter Vakuum und dann Verringern des Drucks im Gefäß unter 100 Pa und Erhöhen der Reaktionstemperatur auf 150~200°C und Weiterführen der Reaktion über einen Zeitraum von weiteren 15 bis 20 h und Erhalten eines Milchsäure-Präpolymers mit dem Mw von 0, 8 x 10³ bis 3,0 x 10⁴;
und der Schritt (2) des Herstellungsverfahrens Folgendes umfasst: Geben des in Schritt (1) erhaltenen Milchsäure-Präpolymers in das Reaktionsgefäß, dann Vakuumpumpen des Gefäßes und Einleiten von Stickstoff und Weiterführen einer Polymerisationsreaktion bei 150 bis 200°C über einen Zeitraum von 10 bis 50 Minuten in Gegenwart von Kettenverlängerungsmittel und katalytischem Agens, was zu dem gewünschten Produkt mit dem gewichtsmittleren Molekulargewicht von 1 x 10⁵ bis 2 x 10⁵ führt.

3. Herstellungsverfahren nach Anspruch 1, wobei die bei der vorliegenden Erfindung eingesetzten aliphatischen Polycarbonatdiole das gewichtsmittlere Molekulargewicht von 1000 bis 5000 aufweisen.

4. Herstellungsverfahren nach Anspruch 1, wobei das Molverhältnis von Milchsäure und aliphatischem Polycarbonatdiol bei der Polykondensationsreaktion in Schritt (1) des Verfahrens bei der vorliegenden Erfindung 50:1 bis 10:1 beträgt.

5. Herstellungsverfahren nach Anspruch 1, wobei das bei der Kettenverlängerungsreaktion in Schritt (2) der vorliegenden Erfindung eingesetzte katalytische Agens aus der Gruppe umfassend 2inn(II)-octoat, Zinn(II)-chlorid, Dibutylzinndilaurat, Antimon(III)-oxid, Germaniumchlorid, Eisen(III)-caprylat, Cobaltcaprylat, Zinkepoxysäure, Triethylendiamin, Ethanolamin, Diethanolamin alleine oder in Kombination davon ausgewählt wird.

6. Herstellungsverfahren nach Anspruch 1, wobei das bei der vorliegenden Erfindung eingesetzte Kettenverlängerungsmittel aus der Gruppe umfassend Diisocyanatverbindungen, Isocyanatverbindungen und Amidverbindungen ausgewählt wird.

7. Herstellungsverfahren nach Anspruch 1, wobei das Molverhältnis von Milchsäure-Präpolymere zu Kettenverlängerungsmittel 3:1 bis 1:1 beträgt.

8. Herstellungsverfahren nach Anspruch 1, wobei die Milchsäure-Präpolymere vor der Kettenverlängerungsreaktion zu raffinieren und zu reinigen sind.

9. Copolymere auf Basis von Poly(milchsäure), hergestellt nach dem Verfahren, umfassend:
Durchführen einer Polykondensationsreaktion von Milchsäure und aliphatischen Polycarbonatdiolen in Gegenwart von katalytischem Agens unter Vakuum, um die Poly(milchsäure)-Polycarbonat-Copolymere zu synthetisieren, und dann Durchführen einer Kettenverlängerungsreaktion der Poly(milchsäure)-Polycarbonat-Copolymere in Gegenwart von Kettenverlängerungsmittel und katalytischem Agens, wobei die Copolymere auf Basis von Poly(milchsäure) das gewichtsmittlere Molekulargewicht von 1 x 10⁵ bis 2 x 10⁵ aufweisen; und wobei die aliphatischen Polycarbonatdiole aus der Gruppe bestehend aus Polypropylencarbonat, Poly(1,6-hexandiol)carbonat, Poly(1,6-hexandiol)carbonatdiol,
Poly(hexamethylencarbonat)diol und Poly(1,4-butandiol)carbonat ausgewählt werden; und wobei das bei der vorliegenden Erfindung eingesetzte Kettenverlängerungsmittel aus der Gruppe umfassend Diisocyanatverbindungen, Isocyanatverbindungen und Amidverbindungen ausgewählt wird.

10. Copolymere auf Basis von Poly(milchsäure) nach Anspruch 9, wobei die aliphatischen Polycarbonatdiole das gewichtsmittlere Molekulargewicht von 1000 bis 5000 aufweisen.

## Revendications

1. Procédé de préparation de copolymères à base d'acide (poly)lactique, dans lequel ledit procédé comprend les étapes de:
(1) une réaction de polycondensation d'acide lactique et de diols à base de polycarbonate aliphatique est réalisée en présence d'un agent catalytique sous vide pour synthétiser les copolymères à base de polycarbonate d'acide (poly)lactique, dans lequel ledit diol de polycarbonate aliphatique utilisé dans la présente invention est choisi parmi le groupe composé de carbonate de polypropylène, de carbonate de poly(1,6-hexanediol), de diol à base de carbonate de poly(1,6-hexanediol), de diol à base de carbonate de (poly)hexaméthylène et de carbonate de poly(1,4-butanediol),
(2) une réaction d'allongement de chaîne des copolymères à base de polycarbonate d'acide (poly)lactique est réalisée en présence d'un agent d'allongement de chaîne et d'un agent catalytique, et les copolymères à base de polycarbonate d'acide (poly)lactique au Mw de 1 x 10⁵ à 2 x 10⁵ sont obtenus.

2. Procédé de préparation selon la revendication 1, dans lequel ladite étape (1) du procédé de préparation comprend le fait de: ajouter l'acide lactique et le diol à base de polycarbonate aliphatique dans le récipient de réaction, et réaliser une réaction de polycondensation en présence d'un agent catalytique à la pression de 1000 à 2000 Pas dans le récipient et à la température de 90 à 120ºC pendant de 1 à 5h sous vide, puis réduire la pression dans le récipient au-dessous de 100 Pas et élever la température de la réaction à de 150~200ºC et procéder à la réaction pendant encore 15 à 20h, et obtenir un prépolymère à base d'acide lactique au Mw de 0,8 x 10³ à 3,0 x 10⁴,
et ladite étape (2) du procédé de préparation comprend le fait de: ajouter le prépolymère à base d'acide lactique obtenu à l'étape (1) dans le récipient de réaction, puis pomper le récipient sous vide et introduire de l'azote, et procéder à une réaction de polymérisation à de 150 à 200ºC pendant de 10 à 50 minutes en présence de l'agent d'allongement de chaîne et de l'agent catalytique, ayant pour résultat le produit requis au poids moléculaire moyen en poids de 1 x 10⁵ à 2 x 10⁵.

3. Procédé de préparation selon la revendication 1, dans lequel ledit diol à base de polycarbonate aliphatique utilisé dans la présente invention présente le poids moléculaire moyen en poids de 1000 à 5000.

4. Procédé de préparation selon la revendication 1, dans lequel le rapport molaire entre l'acide lactique et le diol de polycarbonate aliphatique est de 50:1 à 10:1 dans la réaction de polycondensation à l'étape (1) du procédé dans la présente invention.

5. Procédé de préparation selon la revendication 1, dans lequel l'agent catalytique utilisé dans la réaction d'allongement de chaîne à l'étape (2) de la présente invention est choisi parmi le groupe composé de: octoate d'étain, chlorure d'étain, dilaurate de dibutylétain, oxyde d'antimoine, chlorure de germanium, caprylate ferrique, caprylate de cobalt, acide de zinc époxyde, diamine de triéthylène, éthanolamine, diéthalonamine, seul ou en combinaison de ces derniers.

6. Procédé de préparation selon la revendication 1, dans lequel ledit agent d'allongement de chaîne utilisé dans la présente invention est choisi parmi le groupe composé de composés de diisocyanate, de composés d'isocyanate et de composés d'amide.

7. Procédé de préparation selon la revendication 1, dans lequel le rapport molaire entre le prépolymère d'acide lactique et l'agent d'allongement de chaîne est de 3:1 à 1:1.

8. Procédé de préparation selon la revendication 1, dans lequel le prépolymère d'acide lactique doit être raffiné et purifié avant la réaction d'allongement de chaîne.

9. Copolymères à base d'acide (poly)lactique préparés par le procédé comprenant le fait de: réaliser une réaction de polycondensation d'acide lactique et de diols à base de polycarbonate aliphatique en présence d'un agent catalytique sous vide pour synthétiser les copolymères à base de polycarbonate d'acide (poly)lactique, et ensuite réaliser une réaction d'allongement de chaîne des copolymères à base de polycarbonate d'acide (poly)lactique en présence de l'agent d'allongement de chaîne et de l'agent catalytique, et dans lequel lesdits copolymères à base d'acide (poly)lactique présente le poids moléculaire moyen en poids de 1 x 10⁵ à 2 x 10⁵; et dans lequel lesdits diols à base de polycarbonate aliphatique sont choisis parmi le groupe composé de carbonate de polypropylène, de carbonate de poly(1,6-hexanediol), de diol à base de carbonate de (poly)1,6-hexanediol, de diol à base de carbonate de (poly)hexaméthylène et de carbonate de (poly)1,4-butanediol; et dans lequel ledit agent d'allongement de chaîne utilisé dans la présente invention est choisi parmi le groupe composé de composés de diisocyanate, de composés d'isocyanate et de composés d'amide.

10. Copolymères à base d'acide (poly)lactique selon la revendication 9, dans lequel lesdits diols à base de polycarbonate aliphatique présentent le poids moléculaire moyen en poids de 1000 à 5000.
